# EUROPEAN PATENT APPLICATION

(11) **EP 4 843 843 A1**
(43) Date of publication of application: **25.11.2026**
(21) Application number: 26180187.2
(22) Date of filing: 21.05.2026
(51) Int. Cl.: B60T 1/06

(54) **DISC BRAKE FOR RAILWAY VEHICLES**

(30) Priority: 22.05.2025 IT 202500011617
(71) Applicant: Cofren S.r.L., 83100 Avellino (IT)
(72) Inventor: DE SOCCIO, Vittorio, 83100 AVELLINO (IT)
(74) Representative: Studio Torta S.p.A.

(57) **Abstract**

A disc brake for railway vehicles comprising a pad (7) and a disc (6), upon which the pad (7) acts. The pad (7) comprises a base plate (8) and a plurality of friction elements (5), which are arranged along two or more arched rows (12) and each of the friction elements (5) has a trapezoidal friction surface (5a). In each of the arched rows (12), the friction elements (5) alternate in an arrangement (a), in which the trapezoidal friction surface (5a) has a larger base facing, in use, an outer edge (6a) of the disc (6) and a smaller base facing an inner edge (6b) of the disc (6), and in an arrangement (b), in which the trapezoidal friction surface (5a) has the larger base facing, in use, the inner edge (6b) of the disc (6) and the smaller base facing, in use, the outer edge (6a) of the disc (6). Each of the friction elements (5) has the smaller base of the trapezoidal friction surface (5a) defined by a concave edge and the larger base of the trapezoidal friction surface (5a) defined by a convex edge, or the smaller base of the trapezoidal friction surface (5a) defined by a convex edge and the larger base of the trapezoidal friction surface (5a) defined by a concave edge.

## Description

### CROSS-REFERENCE TO RELATED APPLICATIONS

This patent application claims priority from Italian patent application no. 102025000011617 filed on May 22, 2025, the entire disclosure of which is incorporated herein by reference.

### TECHNICAL FIELD

The invention relates to a disc brake for railway vehicles. In particular, the invention advantageously, though not exclusively, applies to high-speed railway vehicles, namely trains whose cruising speed is greater than 250 km/h.

### PRIOR ART

As it is known, disc brakes are subjected to great stresses and, in order to obtain an ideal braking action, there has to be a good transmission of the braking force from the pad to the disc.

For a long time now manufacturers have been using pads comprising a plurality of small-sized friction elements, instead of one single large-sized friction element. According to one of the solutions adopted to this regard, each pad substantially consists of a main base plate and of a plurality of friction elements, which are fixed to the base plate. Generally, each one of the friction elements consists of a metal sheet and of a friction button, which is fixed to the metal sheet in an irreversible manner.

The solution relating to the use of a plurality of small-sized friction elements is advantageous both in terms of effectiveness of the pressure on the disc and, therefore, of braking, and in terms of low noise.

To this regard, it should be pointed out that low noise has increasingly become an important discriminating factor in the choice of the disc brakes to be used.

One of the problems that the use of pads with a plurality of friction elements had to face was the correct thermal distribution between the disc and the friction elements.

As a person skilled in the art knows, the thermal distribution necessarily affects the wear levels of the disc as well as the formation of cracks on the disc itself.

A solution adopted to improve thermal distribution was to increase the friction area. To this regard, the friction elements are arranged along arched rows, which, in use, overlap respective concentric rings of the disc upon which the pad acts. Furthermore, the friction elements are arranged so that the elements of each row act upon a portion of the surface of the disc that partially overlaps the portions of the surface of the disc upon which the friction elements of an outermost row and of an innermost row act.

Experiments have shown that the trapezoidal shape of the friction elements is the one that best meets the needs of friction with the disc. In particular, the friction elements have a trapezoidal friction surface arranged with their larger base facing, in use, the outer edge of the disc and with their smaller base facing, in use, the inner edge of the disc.

Another solution that is used in the prior art is to place the pad in such a way that the friction elements are, in use, as a whole, arranged so as to interact with a portion of the disc that is off-centre, namely shifted more towards the outer edge than towards the inner edge.

Although the solutions discussed above have improved the aspects relating to the friction area on the disc and, therefore, to thermal distribution, however, the industry felt the need to further improve the friction area of the disc, though without increasing the number of friction elements.

In fact, a change in the number of friction elements would necessarily force the manufacturer of disc brakes to also change the size or shape of the base plates of the pad and, above all, would increase the weight of the pad with the consequence of an increase in the weight of the train as a whole. To this regard, with the aim of reducing energy consumptions dictated by environmental reasons, lately there is a need to intervene by reducing the weight of the train as a whole.

Another aspect of the invention to be taken into consideration is that the shape of the friction elements is not modified, but only the arrangement thereof changes. In this way, the solution of the invention does not entail a further expense due to a new production of friction elements.

The inventor of this invention created a new pad for railway disc brakes, whose technical features are such as to guarantee a greater area of friction without increasing the number of friction elements and without modifying the shape thereof.

According to a preferred embodiment of the disc brake of the invention, the pad is modified to obtain the desired decrease in weight for the advantages mentioned above. To this regard, it should be pointed out that a lightening of the disc brake pads can also lead to a lightening of the disc, with a further contribution to the reduction of the overall weight of the train.

### SUBJECT-MATTER OF THE INVENTION

The subject-matter of the invention is a disc brake for railway vehicles comprising a pad and a disc upon which the pad acts; said pad comprising a base plate and a plurality of friction elements fixed to the base plate; all said friction elements being arranged along two or more arched rows; each of said friction elements having a trapezoidal friction surface; said disc brake being characterized in that, in each of said at least two arched rows, the friction elements alternate in an arrangement (a), in which said trapezoidal friction surface has the larger base facing, in use, an outer edge of the disc and the smaller base facing, in use, an inner edge of the disc, and in an arrangement (b), in which said trapezoidal friction surface has the larger base facing, in use, the inner edge of the disc and the smaller base facing, in use, the outer edge of the disc; each of said friction elements having a trapezoidal friction surface, in which said smaller base is defined by a concave edge and said larger base is defined by a convex edge, or said smaller base is defined by a convex edge and said larger base is defined by a concave edge; said smaller base and said larger base that face, in use, said outer edge of the disc being defined by a convex edge; said smaller base and said larger base that face, in use, said inner edge of the disc being defined by a concave edge.

According to the invention, two successive friction elements have, in use, the larger base of the trapezoidal friction surface facing, for one, the outer edge of the disc and facing, for the other, the inner edge of the disc.

From the above it appears that the trapezoidal friction surface of each of the friction elements has a concave larger base and a convex smaller base, or vice versa.

The convex shape of the edge facing the outer edge of the disc and the concave shape of the edge facing the inner edge of the disc have the function of achieving an effective action of the friction elements upon the disc. In this way, in fact, the edges of the smaller and larger bases of the friction elements follow in a certain way the concentric rings of the disc, thus avoiding phenomena of vibration and, therefore, of high noise.

Preferably, said concave edge and said convex edge have a curvature that is the same as the curvature of concentric rings of said disc.

Preferably, the base plate is defined by an edge that reproduces the profile of the assembly consisting of the friction elements fixed to said base plate.

By so doing, a significant lightening of the pad as a whole was obtained, as required by the railway industry.

Preferably, the ratio between the minimum distance between the friction elements and the outer edge of the disc and the minimum distance between the friction elements and the inner edge of the disc must range from 0.5 to 1.5; preferably from 0.7 to 1.3.

The above-mentioned ratio between the distances of the friction elements and the outer and inner edges of the disc indicate that the brake of the invention makes sure that the pad and, therefore, the friction elements interact, substantially, with a central portion of the circular crown defined by the outer edge and the inner edge of the disc.

The inventor of this invention found that arranging the friction elements with an alternating orientation and positioning the pad so as to act upon a central portion of the disc leads to an increase in the area of friction on the disc itself with respect to the prior art, in which the friction elements are all positioned in the same direction and the pad acts upon a peripheral portion of the disc.

Preferably, five friction elements arranged along two arched rows are fixed to the base plate; more preferably, an inner arched row consists of two friction elements and an outer arched row consists of three friction elements.

### BRIEF DESCRIPTION OF THE DRAWINGS

The invention will be best understood upon perusal of the following description of an embodiment, provided by way of mere explanatory, non-limiting example, with reference to the figures of the accompanying drawings, wherein:
figure 1 shows the configuration of the friction elements on a respective disc of a brake according to the prior art;
figure 2 shows the configuration of the friction elements on a respective disc of a brake according to the invention;
figure 3 is a diagram comparing the friction area obtained with the configuration of figure 1 and the one obtained with the configuration of figure 2;
figure 4 is a view from above of a pad according to the invention;
figure 5 is a view from the bottom of the pad of figure 4.

### PREFERRED EMBODIMENT OF THE INVENTION

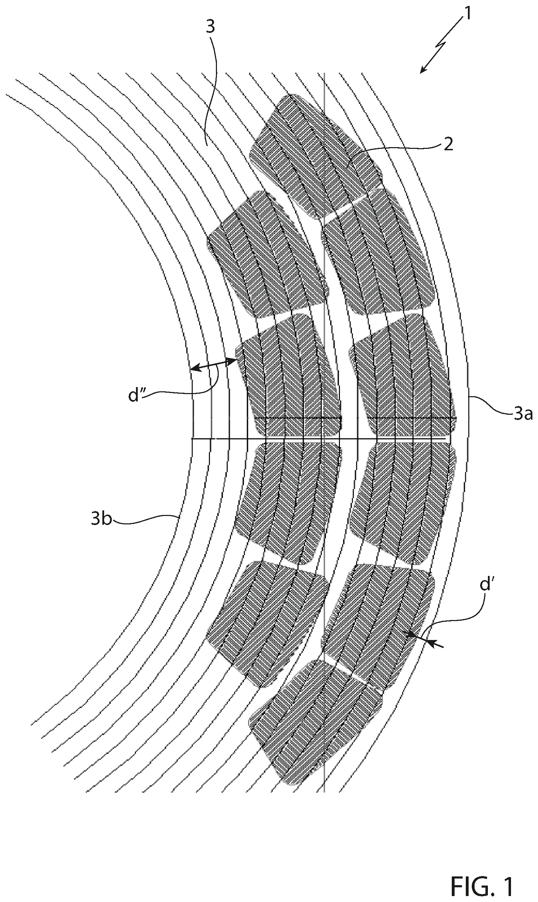

In figure 1, number 1 indicates, as a whole, a configuration of friction elements 2 on a disc 3 according to a brake of the prior art.

As shown in figure 1, the friction elements 2 all have the same size and shape. In particular, the friction elements 2 have a trapezoidal shape and all have the larger base of the trapezoid facing the outer edge 3a of the disc 3 and the smaller base of the trapezoid facing the inner edge 3b of the disc 3.

Furthermore, the friction elements 2 act upon a portion of the disc 3 that is off-centre and shifted towards the outer edge 3a of the disc 3.

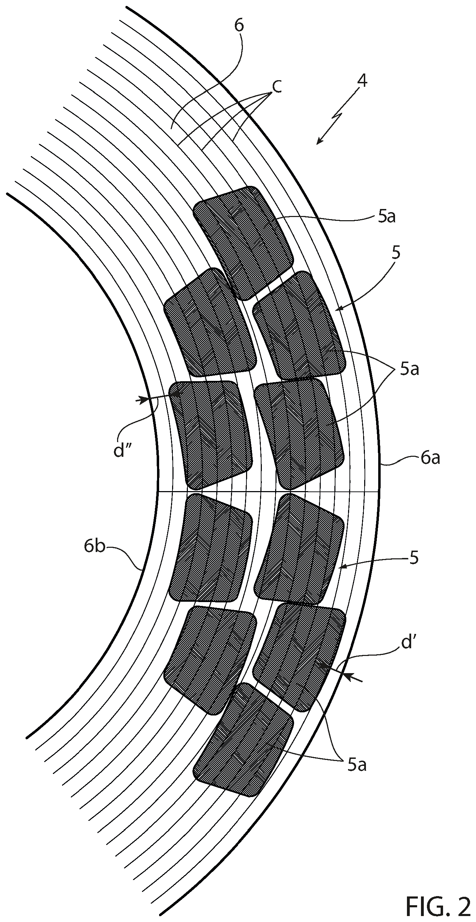

In figure 2, number 4 indicates, as a whole, a configuration of friction elements 5 on a disc 6 according to a brake of the invention.

As shown in figure 2, contrary to configuration 1 of figure 1, the friction elements 5 of configuration 4 have an alternated orientation. Namely, while one friction element 5 has the larger base of the trapezoid facing the outer edge 6a of the disc 6 and the smaller base of the trapezoid facing the inner edge 6b of the disc 6, the adjacent friction element 5, on the other hand, has the smaller base of the trapezoid facing the outer edge 6a of the disc 6 and the larger base of the trapezoid facing the inner edge 6b of the disc 6.

Again, unlike configuration 1, each of the friction elements 5 of configuration 2 has a trapezoidal friction surface 5a, in which the smaller base is defined by a concave edge and the larger base is defined by a convex edge or vice versa.

In particular, the smaller bases and the larger bases facing the outer edge 6a of the disc have a convex shape; whereas the smaller bases and the larger bases facing the inner edge 6b of the disc have a concave shape. As mentioned above, this conformation of the smaller and larger bases depending on the edge of the disc they are facing, leads to the absence of vibrations and, consequently, of noise during the braking action in which the friction elements 5 act upon the disc 6.

Furthermore, again contrary to configuration 1 of figure 1, the friction elements 5 act upon a central portion of the disc 3 that is substantially equally distant from the outer edge 6a and from the inner edge 6b of the disc 6.

The portion of the disc upon which the set of friction elements 2 or 5 act is identified with a ratio (d'/d") between the minimum distance d' of the friction elements 2 or 5 from the outer edge 3a or 6a and the minimum distance d" of the friction elements 2 or 5 from the inner edge 3b or 6b.

According to the invention, the ratio d'/d" ranges from 0.5 to 1.5 and preferably from 0.7 to 1.3. In particular, in configuration 1 of the prior art of figure 1, the ratio d'/d" is 0.2, while, in configuration 4 of figure 2, the ratio d'/d" is 0.71.

Table I shows the values of the friction areas as a function of the radius of the disc for configuration 1 and configuration 4, respectively. Furthermore, the last row of Table I shows the values of the total friction areas for both configurations 1 and 4.

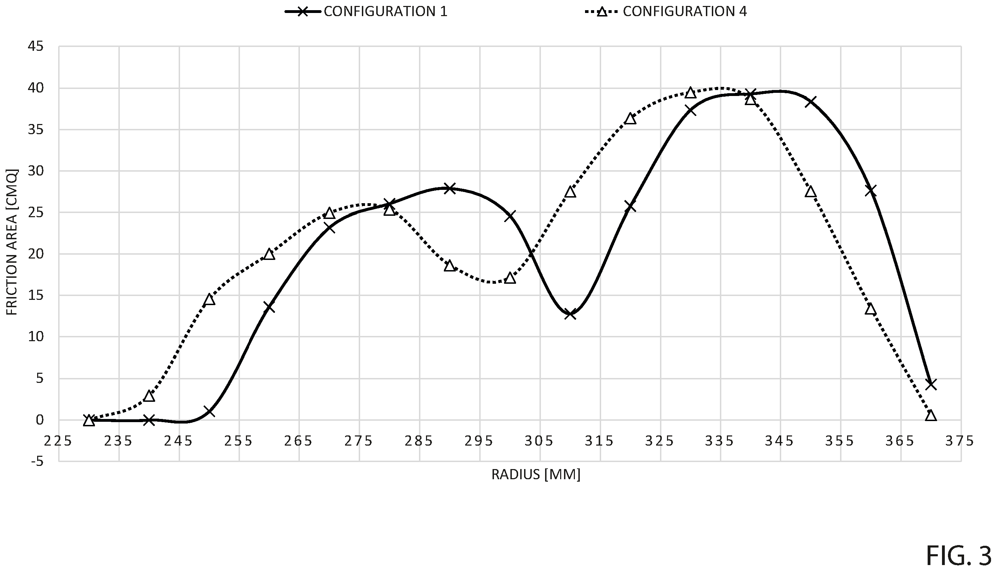

For a better explanation, figure 3 shows the friction areas in a diagram.

As shown both in Table I and in the diagram of figure 3, the characteristics of configuration 4 achieve an increase in the area of friction on the disc without having modified either the number of friction elements or the shape thereof, but having only modified their arrangement.

In particular, the diagram of figure 3 clearly highlights how configuration 4 of the invention guarantees a greater uniformity of the friction area as a function of the distance from the centre (length of the radius in the abscissa). In fact, in the diagram of figure 3, the line relating to configuration 1 of the prior art shows a significantly greater depression than that of the line relating to configuration 4 of the invention.

The greater uniformity of the friction area produced by the configuration of the invention necessarily leads to a better thermal distribution and, as a consequence, to a lower wear of the disc.

**Table I**

| Disc radius (mm) | FRICTION AREA (cm²) | |
|---|---|---|
| | Configuration 1 | Configuration 4 |
| 230 | 0 | 0 |
| 240 | 0 | 2.96 |
| 250 | 1.06 | 14.60 |
| 260 | 13.63 | 20.04 |
| 270 | 23.20 | 24.97 |
| 280 | 26.04 | 25.39 |
| 290 | 27.89 | 18.66 |
| 300 | 24.59 | 17.18 |
| 310 | 12.79 | 27.54 |
| 320 | 25.78 | 36.38 |
| 330 | 37.35 | 39.49 |
| 340 | 39.29 | 38.70 |
| 250 | 38.36 | 27.56 |
| 260 | 27.64 | 13.45 |
| 270 | 4.31 | 0.6 |
| Tot | 302 | 308 |

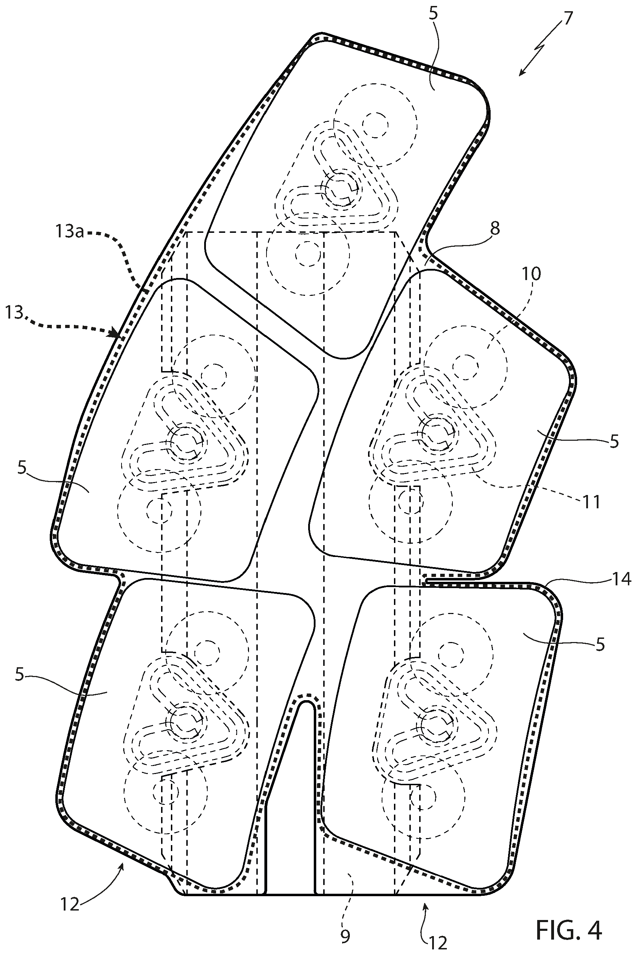

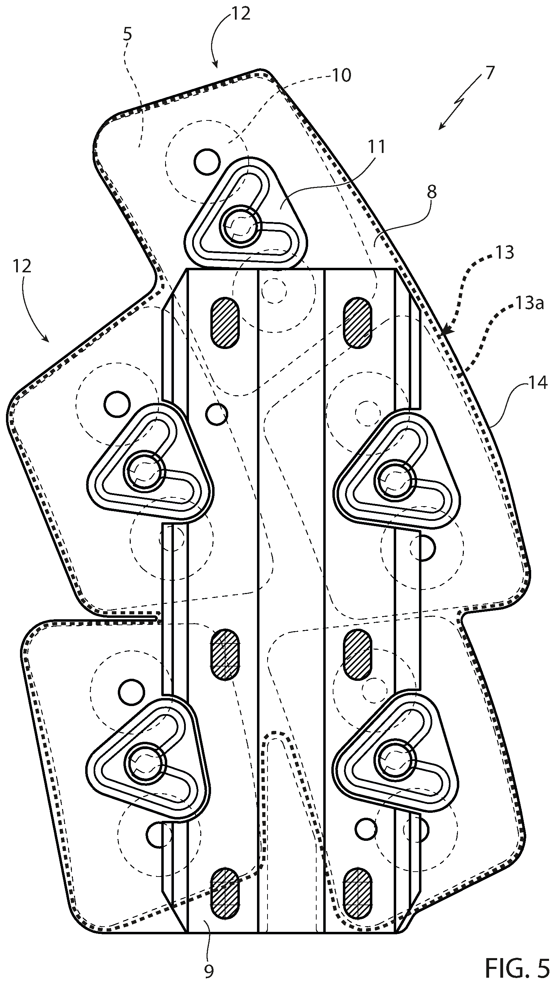

In figures 4 and 5, number 7 indicates, as a whole, a pad for disc brakes according to the invention.

The pad 7 comprises a base plate 8, a "dovetail" fixing element 9, which is fixed to a rear surface of the base plate 8 and is designed to fix the pad 7 to a structure of the disc brake, and a plurality of friction elements 5 fixed to the base plate 8 and arranged so as to exert pressure upon the disc of the brake in order to carry out the braking action.

A pair of spacer discs 10 and a locking spring 11 are associated with each of the friction elements.

For the purposes of the invention, it is irrelevant whether the friction elements 5 are fixed to the base plate 8 in a reversible manner or in an irreversible manner.

Each of the friction elements 5 has a trapezoid-shaped friction surface.

The friction elements are arranged along two arched rows 12, which, in use, substantially overlap the concentric rings of the disc upon which the pad acts.

As already described for configuration 4 of figure 2, the friction elements 5 along a same arched row 12 are arranged in an alternated manner with an inverted orientation. That is, two friction elements 5 adjacent to one another have the two larger bases of the relative trapezoidal shapes facing in opposite directions.

The five friction elements 5 constitute a friction assembly 13, whose outer profile is reproduced in the shape of the base plate 8. In other words, the base plate 8 is delimited by an edge 14 that follows the profile 13a of the friction assembly 13 itself.

The shape of the base plate according to the invention has made it possible to lighten the base plate 8 itself.

As mentioned above, the industry of disc brakes for trains is also focused on solutions that permit, while ensuring the same performance, a decrease in weight. This need derives from the request to reduce energy consumptions. A smaller weight of the train necessarily translates into a smaller energy consumption for its movement.

In addition, another advantage deriving from the particular shape of the base plate 8 relates to a greater cooling capacity compared to the base plates of the prior art. This greater cooling capacity derives from a larger surface of contact with air. In fact, the edge 14 of the base plate 8 certainly is more complex than that of the base plates of the prior art, with the consequence that it exposes a larger contact surface to the air and, consequently, features a greater cooling capacity, as well as an improvement in terms of dissipation of the heat generated on the disc by the friction elements themselves. In other words, the larger air-exposed surface of the base plate contributes, together with the larger friction surface, to the improved heat dissipation that the pad of the invention entails. To sum up, the solution of the invention relates to a novel arrangement of the friction elements that guarantees an increase in the area of friction of the friction elements on the disc and, at the same time, a lightening of the pad together with an increased cooling capacity. These effects lead, on the whole, to an advantage in terms of greater heat dissipation and, therefore, of less wear and to an advantage in terms of lightening of the train as a whole and, therefore, of less energy consumption.

## Claims

1. Disc brake for railway vehicles comprising a pad (7) and a disc (6) on which the pad (7) acts; said pad (7) comprising a base plate (8) and a plurality of friction elements (5) fixed to the base plate (8); all said friction elements (5) being arranged along two or more arcuate rows (12); each of said friction elements (5) having a trapezoidal friction surface (5a); said disc brake being **characterised in that** in each of said at least two arched rows (12) the friction elements (5) alternate in an arrangement (a), in which said trapezoidal friction surface (5a) has a larger base facing in use towards an external edge (6a) of the disc (6) and a smaller base facing in use towards an internal edge (6b) of the disc (6), and in an arrangement (b), in which said trapezoidal friction surface (5a) has the larger base facing in use towards the internal edge (6b) of the disc (6) and the smaller base facing in use towards the external edge (6a) of the disc (6); each of said friction elements (5) having (i) said minor base of said trapezoidal friction surface (5a) defined by a concave edge and said major base of said trapezoidal friction surface (5a) defined by a convex edge, or (ii) said minor base of said trapezoidal friction surface (5a) defined by a convex edge and said major base of said trapezoidal friction surface (5a) defined by a concave edge; said minor base and said major base which are directed, in use, towards said external edge (6a) of the disk (6), being defined by a convex edge; said minor base and said major base which are directed, in use, towards said internal edge (6b) of the disk (6), being defined by a concave edge.

2. Disc brake for railway vehicles according to claim 1, **characterised in that** said concave edge and said convex edge have a curvature equal to the curvature of concentric rings (C) of said disc (6).

3. Disc brake for railway vehicles according to claim 1 or 2, **characterised in that** a ratio (d'/d") between a minimum distance (d') between the friction elements (5) and the external edge (6a) of the disc (6) and a minimum distance (d") between the friction elements (5) and the internal edge (6b) of the disc (6) must be between 0.5 and 1.5.

4. Disc brake for railway vehicles according to claim 3, **characterised in that** the ratio (d'/d") between the minimum distance (d') between the friction elements (5) and the external edge (6a) of the disc (6) and the minimum distance (d") between the friction elements (5) and the internal edge (6b) of the disc (6) must be between 0.7 and 1.3.

5. Disc brake for railway vehicles according to one of the preceding claims, **characterised in that** the base plate (8) is defined by an edge (14) which reproduces a profile (13a) of a set (13) made up of the friction elements (5) fixed to said base plate (8).

6. Disc brake for railway vehicles according to one of the preceding claims, **characterised in that** five friction elements (5) arranged in two curved rows (12) are fixed to the base plate (8).

7. Disc brake for railway vehicles according to claim 6, **characterised in that** an inner curved row (12) is composed of two friction elements (5) and an outer curved row (12) is composed of three friction elements (5).
